(19) Europäisches Patentamt
European Patent Office
Office européen des brevets

(11) EP 2 163 876 A1

(12) EUROPEAN PATENT APPLICATION

(43) Date of publication:
17.03.2010 Bulletin 2010/11

(51) Int Cl.:
*G01M 5/00* (2006.01)

(21) Application number: 08275020.9

(22) Date of filing: 27.05.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: BAE Systems PLC
6 Carlton Gardens
London SW1Y 5AD (GB)

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Damage Sensors and Processing Arrangements Therefor**

(57)    A damage sensor, for example a crack gauge, a method of providing the same, and a method of sensing damage using the same, are described. The damage sensor comprises at least one direct write resistive element applied to an area of a substrate by a direct write process. Conductive tracks may be connected along two separated portions of the perimeter of the area of the direct write resistive element. The damage sensor may comprise plural direct write resistive elements, for example rectangular-shaped elements, each extending between and connected to two conducting tracks. In a further damage sensor, plural annular resistive elements are positioned in an annular arrangement with respect to each other. In all the damage sensors, the resistive elements may be applied around a hole in a substrate, or extending over a bonded edge between two substrates.

## Fig.3.

**Description**

FIELD OF THE INVENTION

The present invention relates to damage sensors and processing arrangements therefor. The present invention is particularly suited to, but not limited to, crack gauges. More particularly, but not exclusively, the present invention relates to damage sensors for detecting the presence and occurrence of damage to a broad variety of structures such as aircraft, ships and bridges.

BACKGROUND

Structures such as aircraft airframes, ships' hulls, and bridges require regular inspections to check for damage. Inspections are currently usually performed manually according to a schedule. These scheduled inspections are precautionary, and, often, no damage is found. Such inspections are very time consuming and thus costly, since the structure will be out of use whilst the inspection is carried out. However, they are necessary since the consequences of structural failure can be catastrophic.

A number of damage or defect sensor systems are currently being developed. These systems aim to eliminate costly manual technology by enabling structures to perform 'self-inspection' using automated networks of sensors. Such self-inspection systems, if available, would allow the owners and operators of structures to benefit from lower operating costs and less frequent disruptions to use, since the structure would only be out of use if actual maintenance, to repair actual damage, were necessary. Owners and operators would also benefit from lower risk of structural failure, and therefore enhanced safety, since self-inspection systems would enable structures to be continuously monitored throughout their lives, and thus any defects in or damage to the structure would be detected sooner.

Many current sensor concepts are described in "Proceedings of the 5th International Workshop on Structural Health Monitoring", Stanford University, Stanford, CA, September 2005, edited by Fu-Kuo Chang. Current techniques use powered, discrete sensors that actively probe structures using ultrasound, or use highly sensitive ultrasonic microphones that 'listen' for cracks. In currently known sensor systems a compromise must be reached between a number of conflicting factors, such as the complexity of the sensor devices, the number needed to cover a given structure, the sensitivity of the sensor devices, the size and weight of sensor installations, and the overall cost of the sensor system. For example, if it is desired to monitor a ship's bulk for damage using prior-known discrete sensors, it is necessary to use a large number of sensors in order to reliably monitor the entire hull with an appropriate degree of sensitivity. However, the cost, complexity and weight of the system increases with the number of sensors used. Furthermore, individual connections must be made to each sensor. The reliability of any electrical system decreases as the number of electrical connections required increases. The production time for the structure also increases as the number of electrical connections increases, thereby also increasing manufacture costs. For example, fitting discrete strain gauges to a modern military aircraft can add several weeks to the production time. Such sensing systems, if used for damage detection are therefore not readily scalable.

One known type of damage sensor is a crack gauge. Crack gauges are used to sense the occurrence of a crack in a surface. Areas that are often monitored due to being prone to cracking due to fatigue or impact are areas around rivet holes and adhesive bond lines. Known crack gauges comprise conductive tracks applied to the structure's surface. When a crack occurs or propagates, the crack breaks the conductive track, and this loss of conduction is sensed, thereby sensing the crack.

A general process for applying sensor and other electronic functionality directly on to structural surfaces is known as direct write. Known forms of direct writing include printing (e.g. ink-jet printing), painting or other forms of depositing materials on to a structural surface in a controlled pattern. In general, examples of directly written features include conductor tracks, as well as more complex multi-layered patterns.

Further details of direct write are as follows. The term direct write (or direct writing) describes a range of technologies which allows the fabrication of two or three-dimensional functional structures using processes that are compatible with being carried out directly onto potentially large complex shapes (DTI Report February 2004 "Direct Writing"). Direct write manufacturing techniques include: ink jet, micro-spray, quill, pen, aerosol, pulsed laser evaporation, and laser direct etching. Direct write has the ability to fabricate active and passive functional devices directly onto structural parts and assemblies.

In general, in direct write processes, writing or printing materials are referred to as inks, although the actual form of the material may comprise a wide range of powders, suspensions, plasters, colloids, solutes, vapours etc, which may be capable of fluid flow and which may be applied in pastes, gels, sprays, aerosols, liquid droplets, liquid flows, etc. Once applied, the material may be fixed by curing, consolidating, sintering or allowing to dry, frequently involving application of heat to change the state of the material to a solid phase. For the purposes of the present specification, the term "direct write ink" is intended to cover all such materials.

The object or structure (which may be a very large three-dimensional object) on which the deposition is performed is referred to in the art by the term "substrate", and this is the sense of the term as used in the present specification. The deposited ink, once fixed on the substrate, forms a component or part of a structure that is to be manufactured.

WO 2007/088395 A1 discloses the use of direct write to form a crack gauge comprising two parallel conductive tracks that act respectively as a probe track and a sense track. Plural conduction-track crack gauges can be individually monitored using frequency selection.

SUMMARY OF THE INVENTION

The present inventors have realised it would be desirable to provide a crack gauge (or other damage sensor) that can be easily provided and monitored.

The present inventors have further realised it would be desirable to provide a crack gauge (or other damage sensor) that can be easily provided in desired shapes or sizes, including on non-flat structural surfaces.

The present inventors have further realised it would be desirable to provide crack gauges (or other damage sensors) that can readily be integrated with RFID (radio frequency identification) antenna circuits.

The present inventors have further realised it would be desirable to provide crack gauges (or other damage sensors) that are able to give a quantitative indication of the size of a crack (or other type of damage), rather than just indicating the occurrence or presence of a crack. For example, although conductive-track gauges as disclosed in WO 2007/088395 A1 can be used to sense the location (i.e. where along the track) a crack occurs, nevertheless the conductive-track track gauges do not provide an indication of the size of a crack.

The present inventors have further realised it would be desirable to provide crack gauges (or other damage sensors) where a quantitative indication of the size of the crack (or other type of damage) is digitized in some manner, i.e. discrete steps of crack size can be sensed.

The present inventors have further realised it would be desirable to provide crack gauges (or other damage sensors) that allow plural crack gauges (or plural other damage sensors) to be monitored by a single monitoring system and connection arrangement, and where moreover respective quantitative indication of crack size from the different crack gauges (or other damage sensors) can be monitored readily.

The present inventors have further realised it would be desirable if such individual quantitative monitoring was simple to perform, robust to interference, and tolerant of drift in crack gauge response.

In a first aspect, the present invention provides a damage sensor, comprising at least one direct write resistive element applied to an area of a substrate by a direct write process.

The number of direct write resistive elements may be one and the damage sensor may further comprise a first direct write conductive track and a second direct write conductive track adjoining respectively two separated portions of the perimeter of the area of the direct write resistive element.

The direct write resistive element may be substantially rectangular shaped, and the two separated portions of the perimeter may be along the respective adjacent lengths of the two opposing sides of the rectangle.

The damage sensor may comprise a plurality of the direct write resistive elements each extending between and connected to a first direct write track and a second direct write track.

The first and second direct write tracks may be direct write conductive tracks.

The first and second direct write tracks may be direct write resistive tracks.

The first and second direct write tracks and the plurality of direct write resistive elements may be substantially rectangular shaped with the longer sides of the direct write tracks substantially perpendicular to the longer sides of the direct write resistive elements.

The damage sensor may comprise: a plurality of the direct write resistive elements each in the form of an annular resistive element, the plural annular resistive elements positioned in an annular arrangement with respect to each other with respective gaps provided between respective annular resistive elements; and conductive tracks between the respective annular resistive elements.

The annular resistive elements may be substantially circular shaped and the centres of each may be substantially collocated.

The conductive tracks between the respective annular resistive elements may be positioned in a staggered layout.

Each direct write resistive element may be substantially of the same resistance.

At least two of the direct write resistive elements may have a different resistance compared to each other.

The direct write resistive element/elements may be applied partly to a top surface and an edge surface of a first substrate and partly to a top surface of a second substrate so as to extend over a bonded edge where the bottom surface of the first substrate and the top surface of the second substrate are bonded together.

The direct write resistive element/elements may be positioned between a bottom surface of a first substrate and a top surface of a second substrate so as to extend over a bonded edge where the bottom surface of the first substrate and the top surface of the second substrate are bonded together.

The damage sensor may have a resistance greater than or equal to $10\Omega$.

The damage sensor may have a resistance greater than or equal to $20\Omega$.

The damage sensor may have a resistance greater than or equal to $50\Omega$.

The damage sensor may be a crack gauge.

In a further aspect, the present invention provides a damage sensor system comprising one or more damage sensors according to any of the aspects mentioned above coupled to a processor for sensing damage according to a change in resistance of one or more of the direct write resistive elements of the damage sensor or sensors.

A plurality of the damage sensors may be coupled to the processor by one pair of external connections.

In a further aspect, the present invention provides a method of providing a damage sensor; the method comprising: applying at least one direct write resistive element to an area of a substrate by a direct write process.

The number of direct write resistive elements may be one and the method may further comprise applying a first direct write conductive track and a second direct write conductive track adjoining respectively two separated portions of the perimeter of the area of the direct write resistive element.

The direct write resistive element may be substantially rectangular shaped, and the two separated portions of the perimeter may be along the respective adjacent lengths of the two opposing sides of the rectangle.

The method may comprise applying a first direct write track, a second direct write track, and a plurality of direct write resistive elements each extending between and connected to the first direct write track and the second direct write track.

The first and second direct write tracks may be direct write conductive tracks.

The first and second direct write tracks may be direct write resistive tracks.

The first and second direct write tracks and the plurality of direct write resistive elements may be substantially rectangular shaped with the longer sides of the direct write tracks substantially perpendicular to the longer sides of the direct write resistive elements.

The method may comprise: applying a plurality of the direct write resistive elements each in the form of an annular resistive element, the plural annular resistive elements positioned in an annular arrangement with respect to each other with respective gaps provided between respective annular resistive elements; and applying conductive tracks between the respective annular resistive elements.

The annular resistive elements may be substantially circular shaped and the centres of each may be substantially collocated.

The conductive tracks between the respective annular resistive elements may be positioned in a staggered layout.

Each direct write resistive element may be substantially of the same resistance.

At least two of the direct write resistive elements may have a different resistance compared to each other.

The direct write resistive element/elements may be applied partly to a top surface and an edge surface of a first substrate and partly to a top surface of a second substrate so as to extend over a bonded edge where the bottom surface of the first substrate and the top surface of the second substrate are bonded together.

The direct write resistive element/elements may be positioned between a bottom surface of a first substrate and a top surface of a second substrate so as to extend over a bonded edge where the bottom surface of the first substrate and the top surface of the second substrate are bonded together.

The damage sensor may have a resistance greater than or equal to 10Ω.

The damage sensor may have a resistance greater than or equal to 20Ω.

The damage sensor may have a resistance greater than or equal to 50Ω.

The damage sensor may be a crack gauge.

Two of the direct write resistive elements may be applied either side of a predicted damage source.

The innermost direct write resistive annular element of an annular arrangement may be applied so as to surround a predicted damage source.

The predicted damage source may be a hole in the substrate.

In a further aspect, the present invention provides a method of sensing damage comprising coupling one or more damage sensors according to any of the aspects described above to a processor and using the processor to sense damage according to a change in resistance of one or more of the direct write resistive elements of the damage sensor or sensors.

A plurality of the damage sensors may be coupled to the processor by one pair of external connections.

In a further aspect, the present invention provides a damage sensor, for example a crack gauge, a method of providing the same, and a method of sensing damage using the same. The damage sensor comprises at least one direct write resistive element applied to an area of a substrate by a direct write process. Conductive tracks may be connected along two separated portions of the perimeter of the area of the direct write resistive element. The damage sensor may comprise plural direct write resistive elements, for example rectangular-shaped elements, each extending between and connected to two conducting tracks. In a further possibility, plural annular resistive elements are positioned in an annular arrangement with respect to each other. In each case, the resistive elements may be applied around a hole in a substrate, or extending over a bonded edge between two substrates.

BRIEF DESCRIPTION OF THE DRAWINGS

Figure 1 is a schematic illustration of a crack gauge system;

Figure 2 is a schematic illustration of a direct write crack gauge;

Figure 3 is a schematic illustration of a further direct write crack gauge;

Figure 4 is a schematic illustration of a further direct write crack gauge;

Figure 5 is a schematic illustration of a further direct write crack gauge;

Figure 6 is a schematic illustration of a further direct write crack gauge;

Figure 7 is a schematic illustration of a further crack gauge system;

Figure 8 is a schematic illustration (not to scale) of a plot of the resonance peak amplitudes of the signals analysed for the crack gauge system of Figure 7 when no cracks are sensed; and

Figure 9 is a schematic illustration (not to scale) of a plot of the resonance peak amplitudes of the signals analysed for the crack gauge system of Figure 7 when a crack is sensed at a direct write crack gauge of the crack gauge system.

DETAILED DESCRIPTION

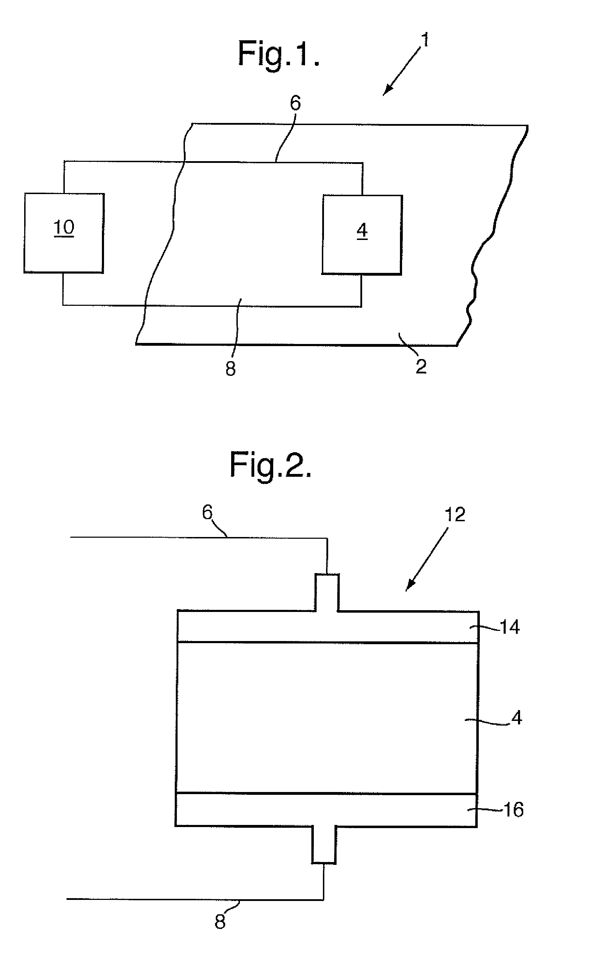

Figure 1 is a schematic illustration of an embodiment of a crack gauge system 1 for sensing cracks on the surface of a substrate 2. The crack gauge system 1 comprises an embodiment of a crack gauge, here a direct write resistive element 4 applied to the surface of the substrate 2. The direct write resistive element 4 is connected via two conducting connections, namely first conducting connection 6 and second conductive connection 8, across a processor 10.

The direct write resistive element 4 is formed of an area of resistive ink (or paste) applied to the surface of the substrate 2. In this embodiment the direct write resistive element 4 is applied to the substrate 2 using the dispensing apparatus described by way of example at the end of the description. In this embodiment the resistive ink comprises carbon which may be obtained from Gwent Electronic Materials. In this embodiment the direct write resistive element 4 is square-shaped with sides 15mm long, and the resistance of the direct write resistive element 4 is 230Ω. Other resistance values may be employed in other embodiments. One criterion for choosing the resistance value is compatibility with measuring instruments forming part of the processor 10. Another particularly convenient value is 105Ω. Resistance values greater than 10Ω, for example greater than 20Ω, or greater than 50Ω, are other useful values.

It will be understood that the term "resistive" as used herein, and as applied to the terminology "resistive elements", will be readily understood by the skilled person as distinct from "conductive elements".

In this embodiment the conducting connections 6, 8 are wires, but in other embodiments they may be formed by other means, for example conducting tracks applied to the surface of the substrate 2 using direct write.

In this embodiment the processor 10 is a resistance meter, which by virtue of being connected via the connections 6, 8 to the direct write resistive element 4 is able to monitor the resistance of the direct write resistive element 4.

In operation, when a crack occurs in the surface of the substrate 2 under the area of the direct write resistive element 4 this also causes a crack to form in the direct write resistive element 4. The presence of the crack in the direct write resistive element 4 provides a change in the resistance of the direct write resistive element being monitored by the processor 10, and hence the crack in the surface of the substrate 2 is sensed. The crack is sensed in a quantitative manner, in that the size of the change in the resistance of the direct write resistive element 4 depends upon the size of the crack. This also allows crack growth to be monitored, i.e. as the crack increases in size, the change in resistance of the direct write resistive element 4 increases. In particular, even if there is no absolute calibration of crack size versus resistance change, the presence of continuing crack growth can be monitored. It will also be apparent that in the case of a crack that was already present when the direct write resistive element 4 was applied, or in situations where a crack was formed after the direct write resistive element 4 was applied but before monitoring began, then growth of the crack can be detected once monitoring is commenced even if the initial occurrence of the crack is not detected in this particular scenario. Thus in summary the crack gauge 1 is operable to sense occurrence and/or growth of a crack in the surface of the substrate 2.

It will further be apparent that the quantitative indication of crack size offered by the use of the direct write resistive element 4 provides a wide range of processing capabilities. By way of a simple example, a system may be arranged to give an intermediate "warning" indication when the resistance change is within a predetermined range, and an "alarm" condition when the resistance change is greater than the predetermined range. A crack completely across the direct write resistive element that causes therefore an open circuit between the two conducting connections 6, 8 may be included in the alarm condition, or may represent a further higher state of alarm, for example. It will be appreciated that the skilled person can implement many possible arrangements making use of the advantageous aspect of quantitative crack size/growth indication provided by the direct write resistive element.

Figure 2 is a schematic illustration of a further embodiment of a direct write crack gauge 12 for sensing cracks on the surface of a substrate 2, that may be used in the above described crack gauge system 1. Items in Figure 2 that are the same as corresponding items in Figure 1 are indicated by the same reference numerals. The direct write crack gauge 12 comprises a direct write resistive element 4 and two direct write conductive tracks, namely first direct write conductive track 14 and second direct write conductive track 16, adjoining respectively two separated portions of the perimeter of the area of the direct write resistive element 4. The first direct write conductive track 14 is connected to the first conductive connection 6. The second direct write conductive track 16 is connected to the second conductive connection 6. Thus, as described above with respect to Figure 1, the processor 10 (not shown in Figure 2), by virtue of being connected via the conductive connections 6, 8 to the direct write resistive element 4 is able to monitor the resistance of the direct write crack gauge 12.

In this embodiment, the direct write resistive element is of substantially rectangular shaped area, and the two respective separated portions of the perimeter of the area of the direct write resistive element 4 where the two direct write conductive tracks 14, 16 are provided are the respective entire lengths of two opposing sides of the rectangle. However, this need not be the case, and in other embodiments other locations are possible. For example, the two opposite sides of the rectangle may be the two portions, but the direct write conductive tracks 14, 16 may not extend along the whole length of one or both sides of the rectangle. Furthermore, in other embodiments the area of the direct write resistive element 4 may be a shape other than substantially rectangular, in which case the locations and extent may be selected by the skilled person according to any appropriate aspect of the design or use under consideration.

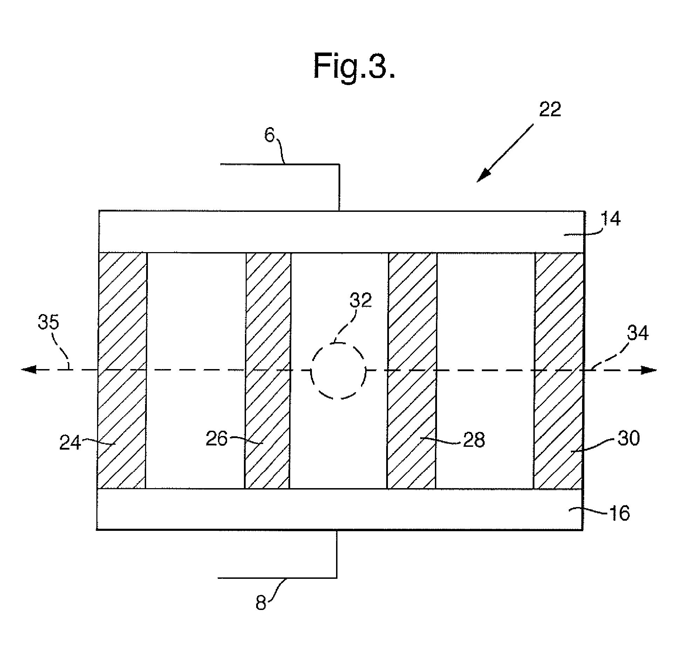

Furthermore, in this embodiment the direct write conductive tracks 14, 16 are each substantially shaped in the form of thin rectangular strips with one side corresponding to the straight side of the area of the direct write resistive element 4, plus a tab-like area extending away from the rectangular strip for the purpose of providing a convenient connection area for the conductive connections 6, 8. However, in other embodiments the direct write conductive tracks may be provided in other shapes as required, including without the tab-like feature (as shown for example in later Figure 3).

The direct write crack gauge 12, comprising a direct write resistive element 4 as described above with reference to Figure 1, but with direct write conductive tracks 14, 16 at opposing sides of the direct write resistive element 4, operates in the same fashion as the crack gauge described above with reference to Figure 1 to sense the occurrence and/or growth of a crack, but with a tendency or capability to provide an improved reproducibility or uniformity of calibration with respect to the crack gauge of Figure 1. In particular, the magnitude of any resistance change in the direct write crack gauge 12 is less dependent on whereabouts in the area of the direct write resistive element 4 the crack is, as the extension of the direct write conductive tracks 14, 16 provides in effect an averaging of the localised resistance change in the direct write resistive element 4 caused by the crack.

Figure 3 is a schematic illustration of a further embodiment of a direct write crack gauge 22 for sensing cracks on the surface of a substrate 2, that may be used in the above described crack gauge system 1. Items in Figure 3 that are the same as corresponding items in Figure 1 and/or Figure 2 are indicated by the same reference numerals. The direct write crack gauge 22 comprises a plurality of separate direct write resistive elements each extending between and connected to the first direct write conductive track 14 and the second conductive track 16. Thus an overall resistance of the direct write crack gauge 22 is provided that is constituted by the plural direct write resistive elements arranged and connected electrically-in-parallel. In this example, there are four direct write resistive elements, namely first direct write resistive element 24, second direct write resistive element 26, third direct write resistive element 28 and fourth direct write resistive element 30. Each direct write resistive element 24, 26, 28, 30 is applied to the surface of the substrate 2 in the same manner, and is of the same material as, the direct write resistive element 4 described above with reference to Figure 1. In this example the areas of each direct write resistive element 24, 26, 28, 30 is of approximately the same dimensions in the form of a thin substantially rectangular shape, the dimensions in this example of each element being approximately 15mm long by 0.3mm wide, with the elements spaced apart at a pitch of approximately 0.5mm. In this embodiment the direct write conductive tracks 14, 16 are each substantially shaped in the form of thin rectangular strips, with their long sides substantially perpendicular to the long sides of the direct write resistive elements 24, 26, 28, 30.

The first direct write conductive track 14 is connected to the first conductive connection 6. The second direct write conductive track 16 is connected to the second conductive connection 8. Thus, in the same manner as described above with respect to Figure 1, the processor 10 (not shown in Figure 3), by virtue of being connected via the conductive connections 6, 8 to the direct write crack gauge 22, is able to monitor the overall resistance of the direct write crack gauge 22.

The direct write crack gauge 22 operates in corresponding fashion to the crack gauges described above with reference to Figures 1 and 2 to sense the occurrence and/or growth of a crack, but with the difference that the resistance that is monitored for changes produced by a crack is the overall resistance of the electrically-in-parallel arrangement of the plural direct write resistive elements 24, 26, 28, 30.

As with the embodiments described with respect to Figures 1 and 2, this embodiment provides quantitative sensing of the size and/or growth of a crack. However, by provision of plural separate write resistive elements as described above, this embodiment additionally offers a tendency or capability to provide a quantized or digitized form of sensing of the crack size or growth. For example, this embodiment readily allows the sensing to distinguish or indicate whether the crack extends over one, two, three or all four of the direct write resistive elements 24, 26, 28, 30, whilst only employing one pair of conductive connections 6, 8.

Figure 3 also shows one example of a particularly advantageous location for the direct write crack gauge 22, namely centred about a hole 32 in the structure of the substrate 2. Holes, e.g. rivet holes, in substrate structures are a typical location where the likelihood of crack formation is increased, hence depositing the direct write crack gauge 22 around such a hole enables the hole to be monitored for crack formation. In this example, the direct write crack gauge 22 is positioned such that the hole 32 lies in the space between the second direct write resistive element 26 and the third direct write resistive element 28. Further shown in Figure 3 are exemplary predicted crack propagation directions 34 and 35. By positioning the direct write crack gauge 22 as described, the direct write crack gauge 22 is able to sense a crack size quantitatively in a quantized fashion for both the examples of crack propagation direction 34, 35 shown.

In this embodiment each direct write resistive element is substantially the same length, width and thickness, and is made of the same direct write ink. Consequently, the resistance of each direct write resistive element is substantially equal, providing a substantially linear form of digitization, which will often be advantageous. However, for some applications a non-linear response may be desirable. Hence in other embodiments the resistance of each annular direct write resistive element may be tailored so that the resistance increases, for example, for the outer resistive elements, e.g. elements 24, 26 compared to the inner elements 26, 28. Another possibility is for the resistance to increase from one side of the direct write crack gauge to the other, for example increasing resistance of element moving from the first direct write resistive element 24 to the fourth direct write resistive element 30. The differing resistances may be implemented by having different widths of the direct write resistive elements and/or different thicknesses of the resistive material and/or by being made of different resistivity materials.

In this embodiment, as shown in Figure 3, first and second direct write conductive tracks 14, 16 are provided at the ends of the plural direct write resistive elements 24, 26, 28, 30. However, this need not be the case, and in other embodiments resistive direct write tracks, for example of the same material as the direct write resistive elements 24, 26, 28, 30, may be provided instead of the conductive tracks. This would disadvantageously tend to be less suitable for calibration and would tend to provide a less-linear digitization compared to the use of conductive tracks, due to the resulting different resistive paths that would be different depending on where the crack was. Nevertheless, such embodiments would instead tend to have trade-off advantages such as simplified manufacture and/or better lifetimes due to a lower number of different materials needing to be deposited.

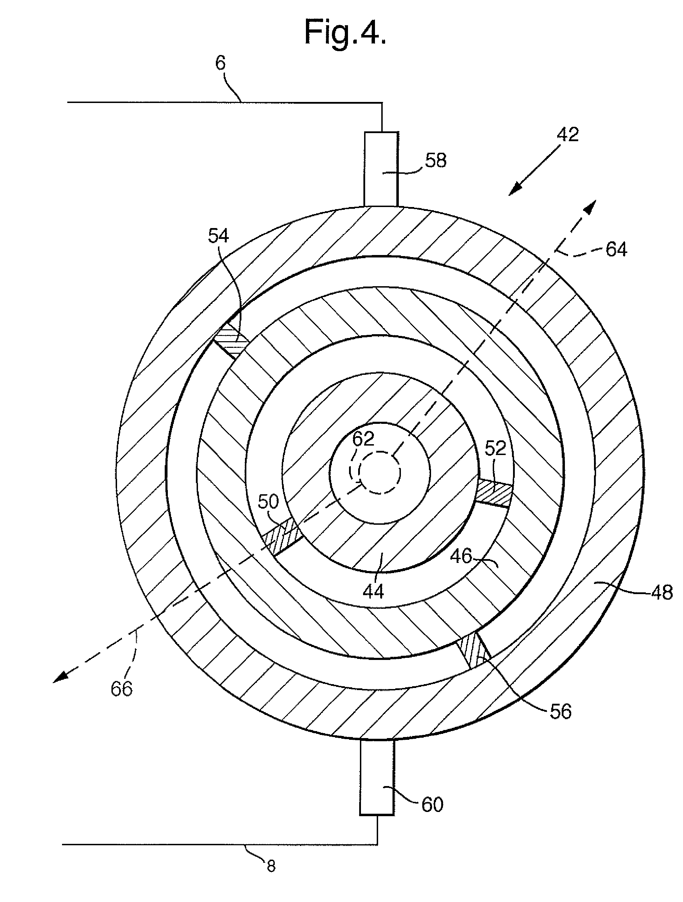

Figure 4 is a schematic illustration of a further embodiment of a direct write crack gauge 42 for sensing cracks on the surface of a substrate 2, that may be used in the above described crack gauge system 1. Items in Figure 4 that are the same as corresponding items in Figure 1 and/or Figure 2 and/or Figure 3 are indicated by the same reference numerals. The direct write crack gauge 42 comprises a plurality of separate spaced apart annular direct write resistive elements each centred around a common centre point.

In particular, the direct write crack gauge 42 comprises a first annular direct write resistive element 44, a second annular direct write resistive element 46, and a third annular direct write resistive element 48. The inner diameter of the second annular direct write resistive element 46 is larger than the outer diameter of the first annular direct write resistive element 44 so as to provide a gap between the outer circumference of the first annular direct write resistive element 44 and the inner circumference of the second annular direct write resistive element 46. Likewise, the inner diameter of the third annular direct write resistive element 48 is larger than the outer diameter of the second annular direct write resistive element 46 so as to provide a gap between the outer circumference of the second annular direct write resistive element 46 and the inner circumference of the third annular direct write resistive element 48.

Each annular direct write resistive element 44, 46, 48 is applied to the surface of the substrate 2 in the same manner, and is of the same material as, the direct write resistive element 4 described above with reference to Figure 1. In this example each annular direct write resistive element 44, 46, 48 is of approximately the same annular width, in this example being approximately 0.3mm, with the radial gaps between the annular elements also being approximately 0.3mm. Other values may be used in other embodiments, and the gaps need not be the same size as the element widths. The resistance values are of the same order as those in the above described embodiments.

Two conducting connections, namely a first ring-connecting direct write conductive track 50 and a second ring-connecting direct write conductive track 52, are provided between the first annular direct write resistive element 44 and the second annular direct write resistive element 46. Likewise, two conducting connections, namely a third ring-connecting direct write conductive track 54 and a fourth ring-connecting direct write conductive track 56 are provided between the second annular direct write resistive element 46 and the third annular direct write resistive element 48.

Two external direct write conductive connections, namely a first external direct write conductive track 58 and a second external direct write conductive track 60, are provided for external connection to the third annular direct write resistive element 48.

Thus an overall resistance of the direct write crack gauge 42 is provided that is constituted by the plural annular direct write resistive elements arranged and connected as described.

The first external direct write conductive track 58 is connected to the first conductive connection 6. The second external direct write conductive track 60 is connected to the second conductive connection 8. Thus, in the same manner as described above with respect to Figure 1, the processor 10 (not shown in Figure 3), by virtue of being connected via the conductive connections 6, 8 to the direct write crack gauge 42, is able to monitor the overall resistance of the direct write crack gauge 42.

The direct write crack gauge 22 operates in corresponding fashion to the crack gauges described above with reference to Figures 1, 2 and 3 to sense the occurrence and/or growth of a crack, but with the difference that the resistance that is monitored for changes produced by a crack is the overall resistance of the plural annular direct write resistive elements 44, 46, 48 arranged and connected as described.

As with the embodiments described with respect to Figures 1 and 2, this embodiment provides quantitative sensing of the size and/or growth of a crack. Also, by provision of plural separate direct write resistive elements, this embodiment also offers a tendency or capability to provide a quantized or digitized form of sensing of the crack size or growth, in similar fashion to that of Figure 3. For example, this embodiment readily allows the sensing to distinguish or indicate whether the crack extends over one, two or all three of the annular direct write resistive elements 44, 46, 48, whilst only employing one pair of conductive connections 6, 8.

Furthermore, by providing the plural separate direct write resistive elements in an annular arrangement, this embodiment further offers a tendency or capability to provide crack sensing any direction of crack growth.

Figure 4 also shows one example of a particularly advantageous location for the direct write crack gauge 42, namely centred about a hole 62 in the structure of the substrate 2. As mentioned previously, holes, e.g. rivet holes, in substrate structures are a typical location where the likelihood of crack formation is increased, hence depositing the direct write crack gauge 42 around such a hole enables the hole to be monitored for crack formation. This is particularly advantageous in this embodiment, as crack growth in any direction from the hole can thus be sensed. Further shown in Figure 4 is a first hypothetical example of a crack propagation direction 64. By designing the widths of the various direct write conductive tracks 50, 52, 54, 56, 58, 60 relatively thin, usually sensing of a crack's growth will not be affected by the crack passing through one of the conductive tracks, i.e. such a non-affected example is given by propagation direction 64.

In this embodiment a further feature is provided that further reduces the affect of a crack passing through one of the conductive tracks, namely certain of the various direct write conductive tracks. In this example the first ring connecting direct write conductive track 50, the second ring connecting direct write conductive track 52, the third ring connecting direct write conductive track 54, and the fourth ring connecting direct write conductive track 56, are positioned in a staggered layout, i.e. not on a common diameter. Thus, for example, a second hypothetical example of a crack propagation direction 66 shown in Figure 4, which is shown for example passing through the first ring connecting direct write conductive track 50, does not pass through any other track.

In this embodiment, as mentioned above, the different annular direct write resistive elements 44, 46, 48 are of the same material and have the same annular width. Consequently, the resistance of each element increases moving out from the first annular direct write resistive elements 44 to the third annular direct write resistive elements 48 due to increasing path lengths, thus increase in resistance with crack growth will be non-linear. This may be an advantage in certain applications. However, in other applications a more linear response of resistance to crack length would be desirable. Hence in other embodiments the resistance of each annular direct write resistive element may be tailored so that the resistance is, for example, the same for each annular direct write resistive element. This may be implemented by having different annular widths and/or different thicknesses of the resistive material and/or by being made of different resistivity materials.

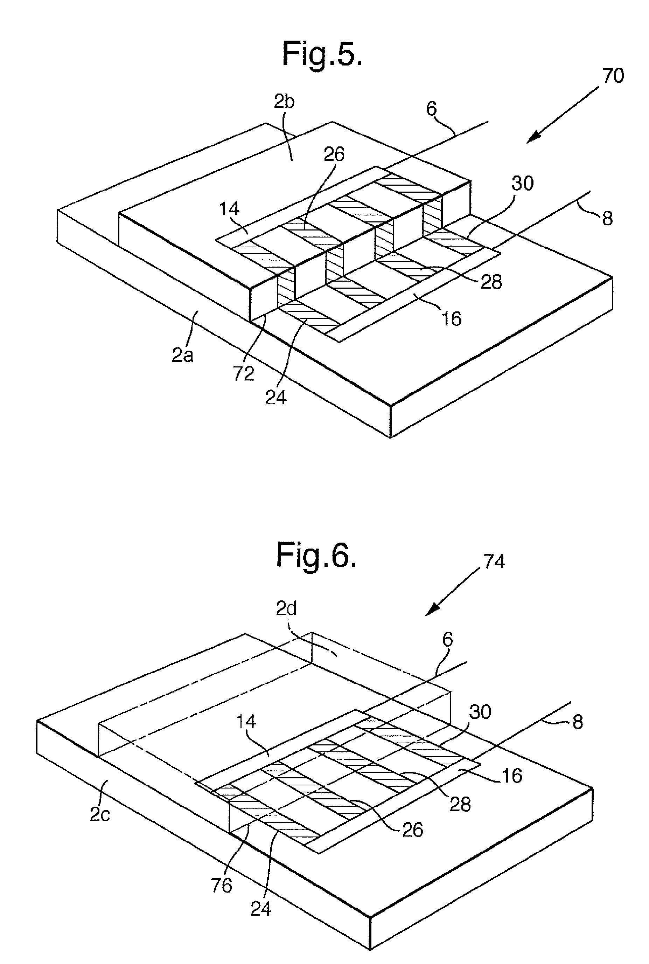

Figure 5 is a schematic illustration of a further embodiment of a direct write crack gauge 70 for sensing cracks that may be used in the above described crack gauge system 1. The direct write crack gauge 70 is based on the direct write crack gauge 22 shown in Figure 3, but is adapted to sense de-bonding of two bonded substrates 2a and 2b. Items in Figure 5 that are the same as corresponding items in Figure 3 are indicated by the same reference numerals. As before, the direct write crack gauge 70 comprises a plurality of separate direct write resistive elements 24, 26, 28, 30, each extending between and connected to the first direct write conductive track 14 and the second conductive track 16. In order to sense a loss in the integrity (i.e. monitor the integrity) of a bonded edge 72 between the lower substrate 2a and the upper substrate 2b, the direct write crack gauge 70 extends over part of the surface of the upper substrate 2b, over the bonded edge 72, and over part of the lower substrate 2. The plurality of separate direct write resistive elements 24, 26, 28, 30 are parallel to each other geometrically and are connected electrically in parallel as well. Each of the direct write resistive elements 24, 26, 28, 30 is provided partly on part of the top surface of the upper substrate 2b, partly on and edge surface of the upper substrate 2b, and partly on the top surface of the lower substrate 2a.

Thus in this embodiment the direct write crack gauge 70 performs sensing of de-bonding or other cracking on, or between, the substrates 2a and 2b, in particular at the bonded edge 72. Such sensing can moreover be performed in a quantitative, quantized or digitized form as described above with reference to Figure 3.

In other embodiments, other crack gauges, e.g. ones based on those described with reference to Figures 1, 2 and 4, may also be applied over the different substrate surfaces in corresponding fashion to that described above with regard to Figure 5 which is based on the crack gauge of Figure 3.

Figure 6 is a schematic illustration of a further embodiment of a direct write crack gauge 74 for sensing cracks that may be used in the above described crack gauge system 1. The direct write crack gauge 74 is based on the direct write crack gauge 22 shown in Figure 3, but is adapted to sense de-bonding of two bonded substrates 2c and 2d. Items in Figure 6 that are the same as corresponding items in Figure 3 are indicated by the same reference numerals. As before, the direct write crack gauge 74 comprises a plurality of separate direct write resistive elements 24, 26, 28, 30, each extending between and connected to the first direct write conductive track 14 and the second conductive track 16. In order to sense a loss in the integrity (i.e. monitor the integrity) of a bonded edge 76 between the lower substrate 2c and the upper substrate 2d, the direct write crack gauge 70 is initially deposited on part of the upper surface of the lower substrate 2c. The plurality of separate direct write resistive elements 24, 26, 28, 30 are parallel to each other geometrically and are connected electrically in parallel as well. Each of the direct write resistive elements 24, 26, 28, 30 is provided initially the top surface of the lower substrate 2c. When the upper substrate 2d is laminated to the lower substrate 2c, this is done such that the edge of the upper substrate 2d lies within the extent of the direct write crack gauge 74 such that a bonded edge 76 between the upper substrate 2d and the lower substrate 2c lies over and crosses the direct write resistive elements 24, 26, 28, 30. The lamination of the upper substrate 2d to the lower substrate 2c is performed such that the direct write crack gauge 74, and in particular the direct write resistive elements 24, 26, 28, 30, become attached to the upper substrate 2d (where the upper substrate lies over them) in addition to their existing attachment to the lower substrate 2c.

Thus in this embodiment the direct write crack gauge 74 performs sensing of de-bonding or other cracking on, or between, the substrates 2a and 2b, in particular at the bonded edge 76. Such sensing can moreover be performed in a quantitative, quantized or digitized form as described above with reference to Figure 3.

In other embodiments, other crack gauges, e.g. ones based on those described with reference to Figures 1, 2 and 4, may also be applied over the different substrate surfaces in corresponding fashion to that described above with regard to Figure 6 which is based on the crack gauge of Figure 3.

The particular shapes and layout arrangements of the above embodiments are not limiting, and in other embodiments other shapes and layout arrangements may be employed. For example, direct write resistive elements may be shaped other than rectangular, e.g. other regular shapes may be used, or less non-uniform shapes may be used. Further, for example, in the case of the device shown in Figure 3, the direct write resistive elements need not be physically or geometrically parallel as such, provided they are electrically-in-parallel. Also, the number of resistive elements in any given device may be specified as required, i.e. the number of resistive elements in the device shown in Figure 3 need not be four, and could instead be any desired number depending on the circumstances in which the device is to be employed. By providing a larger number of resistive elements, the quantization of the sensing can be performed at greater resolution. Likewise, in devices along the lines of that shown in Figure 4, different numbers of annular rings other than three may be implemented. Furthermore, each annular element can be in a shape other than a circle or ring. Furthermore, the different annular resistive elements need not be centred around the same point, provided they nevertheless surround each other respectively.

In the above embodiments, the direct write resistive elements (and where applicable other types of direct write components) are described as being deposited onto the substrate 2. It will be appreciated that such terminology, and in a more general sense the terminology "direct write" in itself, as used in this specification encompasses situations where one or more intermediate layers, coatings or other materials are present between the substrate (or structure being monitored) and the directly-written resistive element (or other direct write component). In other words, the resistive elements as applied to a substrate are still encompassed by the terminology direct write resistive elements when they are written onto a coating or other layer on the substrate or other form a structure to be tested.

In the above embodiments, crack gauges are implemented, including ones for monitoring bonded edges. However, in other embodiments, structures as described above can be implemented as sensors other than crack gauges, i.e. other types of damage sensors can be implemented by the structures described above. Other types of damage sensors that can be implemented include, for example, sensors that detect surface shape or condition change other than a crack as such. Indeed, any damage sensor application can be envisaged where the direct write resistive element applied to the surface will be disrupted in terms of its resistance path by a physical change to the surface of the object where the direct write resistive element is provided.

A further advantage of the above described embodiments of crack gauges (or other damage sensors) is that in further embodiments they may be easily integrated into RFID (radio frequency identification) antenna circuits, thereby offering a convenient form of wireless monitoring of crack gauges.

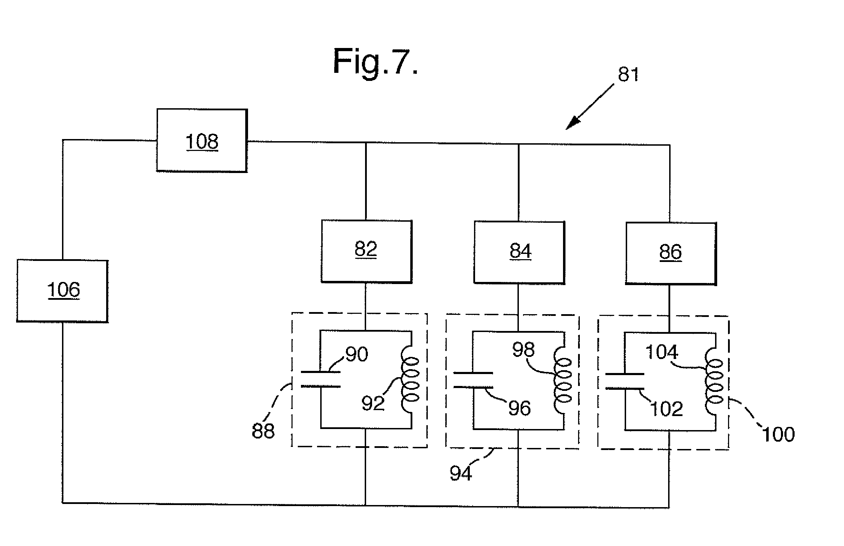

Yet a further advantage of the above described embodiments of crack gauges (or other damage sensors) is that they allow a crack gauge system, such as the system based on tuned circuits described below with reference to Figures 7-9, to be employed, thereby allowing multiple crack gauges to be individually monitored by one pair of external connections, due to the manner in which the above described crack gauges are based on resistive elements whose resistance varies quantitatively as a crack occurs or grows (or other physical effects or damage are sensed).

Figure 7 is a schematic illustration of one example of such a crack gauge system 81 for sensing cracks on the surface of a substrate 2. The crack gauge system 81 comprises three direct write crack gauges arranged in parallel, namely a first direct write crack gauge 82, a second direct write crack gauge 84, and a third direct write crack gauge 86. The direct write crack gauges 82, 84, 86 are any of the types described above with reference to Figures 1-6 (or any other appropriate type of damage sensor as discussed above). Also, any other variations thereof may be used, provided they give a varying resistance derived from one or more resistive elements in response to crack occurrence or growth or other sensed behaviour.

Each direct write crack gauge 82, 84, 86 is connected in series to a respective LC circuit comprising a capacitor and an inductor connected in parallel, as follows. The first direct write crack gauge 82 is connected in series to a first LC circuit 88, the first LC circuit 88 comprising a first capacitor 90 and a first inductor 92 connected in parallel. The second direct write crack gauge 84 is connected in series to a second LC circuit 94, the second LC circuit 94 comprising a second capacitor 96 and a second inductor 98 connected in parallel. The third direct write crack gauge 86 is connected in series to a third LC circuit 100, the third LC circuit 100 comprising a third capacitor 102 and a third inductor 104 connected in parallel.

Each of the direct write crack gauges 82, 86 with their respective series connected tuned circuit 88, 94, 100 are connected across a signal generator and analyser 106. A common resistor 108 is connected between the signal generator and analyser 106 and all of the direct write crack gauges 82, 84,86.

Thus, since each direct write crack gauge is essentially formed of resistive material as described above, each direct write crack gauge forms a net series resistance with the common resistor 108, and this net series resistance (i.e. total resistance of the common resistor 108 and the resistance of the respective direct write crack gauge) provides the resistance component of a respective tuned LCR circuit comprising the respective LC circuit and the respective net series resistance, as follows. The first direct write crack gauge 82 and the common resistor 108 provide the resistance part of a first tuned circuit that further comprises the first capacitor 90 and the first inductor 92. The second direct write crack gauge 84 and the common resistor 108 provide the resistance part of a second tuned circuit that further comprises the second capacitor 96 and the second inductor 98. The third direct write crack gauge 86 and the common resistor 108 provide the resistance part of a third tuned circuit that further comprises the third capacitor 102 and the third inductor 92.

In this example the capacitors 90, 96, 102, and inductors 92, 98, 104, are formed by direct write on the substrate 2. However, in other embodiments, discrete components may be used.

The resonant frequency of oscillation is different for each tuned circuit. This is most conveniently done by selection of the capacitance and/or inductance values of the LC circuits, but it is also possible to use different resistance values for the direct write crack gauges. In this example, the resonant frequency of the first tuned circuit is 2MHz, the resonant frequency of the second tuned circuit is 6MHz, and the resonant frequency of the third tuned circuit is 10MHz.

The signal generator and analyser 108 is operable to provide a range of driving frequencies and to frequency sweep the resultant signals received back to determine signal amplitudes at different frequencies, in particular at frequencies encompassing the resonant frequencies of the tuned circuits.

When there is no crack change, the resistance value of each direct write crack gauge will be at its initial value, and hence the tuned circuit will be at its resonant frequency. However, when a crack occurs or grows at a direct write crack gauge, the resistance of the direct write crack gauge will change (usually will increase), thus the resistance of the net series resistance for that tuned circuit as provided by the common resistor in series with the direct write crack gauge will change, and hence the response of the signal generator and analyser 108 at that tuned circuit's resonant frequency will change. By sensing this change, the crack occurrence or growth is sensed.

Thus each direct write crack gauge can be monitored separately, yet this is achieved by the provision of just a single pair of external connections back to the signal generator and analyser. Moreover, each direct write crack gauge provides a quantitative change in resistance that varies with crack size, as described earlier above, hence overall the crack gauge system 81 provides quantitative monitoring of crack growth sensing at plural discrete locations using only one pair of external connections (i.e. the connections to the signal generator and analyser 106).

In other embodiments, apparatus other than a signal generator and analyser as such may be employed to perform the role of the above described signal generator and analyser.

The provision of multiple direct write crack gauges in a system with only one pair of external connections firstly provides a simple and cost-efficient system in terms of design, installation, cost and so on. Moreover, such provision also tends to provide a system that is particularly stable to electrical and/or electromagnetic interference since there are fewer connections and less wiring that can act undesirably as antennae for receiving interference. Yet further, such provision also tends to provide good stability with regard to drift of component values, in particular resistance, due to ageing, temperature change and so on, since the measurement is frequency/time based rather than necessarily being absolute voltage amplitude based.

In this example the number of direct write crack gauges monitored by the single pair of external connections is three. However, in other examples any appropriate number may be implemented, and it will be appreciated that some or all of the advantages outlined above are capable of being further dramatically amplified when the crack gauge system is implemented with a large number of direct write crack gauges, for example ten, twenty, fifty, one hundred, or even more than one hundred direct write gauges.

In this example, the common resistor 108 is formed by direct write on the substrate 2. However, in other embodiments, one or more discrete components may be used to provide the common resistor.

Also, in this example, the common resistor 108 is provided to reduce the absolute requirement values of the resistances of the direct write crack gauges. However, in other examples, the common resistor can be omitted and the resistance value of the direct write crack gauges selected and provided accordingly. Another possibility is that either in addition to, or instead of, the provision of the common resistor, a separate resistor for each tuned circuit is provided in each tuned circuit.

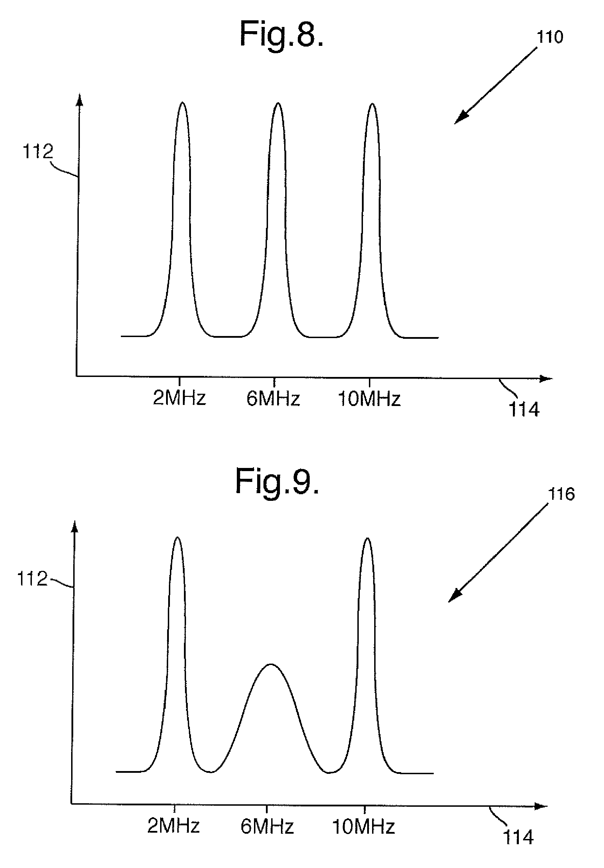

Any suitable approach can be used to analyse the change in response of the tuned circuits of the direct write crack gauges at the respective resonant frequencies. In this example, a particularly advantageous approach including consideration of the respective Q-factors of the tuned circuits is used, as will now be described in more detail with reference to Figures 8 and 9.

Figure 8 is a schematic illustration (not to scale) of a plot of the resonance peak amplitudes 110 of the signals analysed for the crack gauge system 81 of Figure 7 when no cracks are sensed, i.e. the direct write crack gauges are all at their initial resistance values. The plot is in terms of signal strength (voltage) whose axis is indicated by reference numeral 112 and frequency whose axis is indicated by reference numeral 114. In particular, the respective resonance peak amplitudes of the three tuned circuits are present at the three respective resonant frequencies (as described above) of 2MHz, 6MHz and 10Mhz. As shown schematically, the three respective resonance peak amplitudes are all substantially equal, and the resonant peaks are all equally substantially of the same narrow width; i.e. the three tuned circuits each have nominally maximum Q-factor values.

Figure 9 is a schematic illustration (not to scale) of a plot of the resonance peak amplitudes 116 of the signals analysed for the crack gauge system 81 of Figure 7 when a crack is sensed at the second direct write crack gauge 84. In the same manner as with Figure 8, the plot is in terms of signal strength (voltage) whose axis is indicated by reference numeral 112 and frequency whose axis is indicated by reference numeral 114. In particular, the respective resonance peak amplitudes of the three tuned circuits are present at the three respective resonant frequencies (as described above) of 2MHz, 6MHz and 10Mhz. As shown schematically, the first and third respective resonance peak amplitudes are substantially equal to each other, and these two resonant peaks are substantially of the same width as each other; i.e. the corresponding first and third tuned circuits have the same Q-factor values as in Figure 8. However, due to the change in resistance of the second direct write crack gauge 84 due to the crack, the second resonance peak amplitude (i.e. the one for 6MHz) is lower than the other two resonance peak amplitudes, and the second resonance peak (i.e. the one for 6MHz) is also wider than the other two; i.e. the Q-factor of the second tuned circuit is lower than it was previously in Figure 8. As the crack size increases, the second resonance peak amplitude (i.e. the one for 6MHz) will tend to become even lower and the second resonance peak (i.e. the one for 6MHz) will also tend to become even wider; i.e. the Q-factor of the second tuned circuit will tend to become even lower. In the extreme, the second resonance peak may disappear.

By arranging the signal generator to analyse the Q-factors of the different tuned circuits, either for absolute values or relative values, the crack occurrence or growth can accordingly be sensed and monitored. For the above described tuned circuits, the Q-factor is given by the equation:

$$Q = \frac{1}{R}\sqrt{\frac{L}{C}}$$

where R is the net resistance of the common resistor 108 in series with the resistance of the respective direct write crack gauge, L is the inductance of the respective inductor of the respective LC circuit, and C is the capacitance of the respective capacitor of the respective LC circuit.

The dispensing apparatus mentioned in the description of Figure 1 will now be described (by way of example of a suitable dispensing apparatus). An nScrypt "Smart Pump" is specified to dispense lines down to 50μm wide and onto conformal surfaces where the angle of the substrate is below 30°. The theoretical track resolution with a "micro pen" system is 100μm using a 75μm outer diameter tip, although the narrowest lines produced to date are approximately 230μm wide using a 175μm outer diameter tip.

To assist with the materials characterisation and process optimisation, an Intertronics DK118 Digital Dispenser is used, which is a bench top syringe system using a simple pressure regulator to provide material flow. The output pressure can be set from 1 Psi to 100Psi in increments of 1 Psi and the barrel suck-back feature prevents low viscosity materials from dripping. An I/O port allows the dispenser to be interfaced with external devices. The resolution of this dispensing technique is limited by the size and tolerance of the nozzles available. The nozzles have a stainless steel barrel and it is the outer diameter of this that indicates the width of the track. The track width and height can then advantageously be tailored by varying the offset between the substrate and nozzle or by changing the speed of the motion platform. Similarly, the quality of the starts of tracks can be improved by adjusting the timing between the XY motion start and switching on the pressure.

The offset between the direct write tip and the substrate must be maintained during deposition as this influences the track dimensions. If the tip is too high the ink will not flow onto the surface, and if it is too low no ink will flow and there is a danger of damaging the tip. Typically this offset is between 50μm and 200μm depending on the width of the track being written. A Keyence LK081 laser displacement sensor is mounted on the Z stage. This laser sensor has a working distance of 80mm, a 70μm spot size, a measuring range of ±15mm and ±3μm resolution. The accuracy of the height information provided reflects the accuracy of the XY and Z motion stages as well as the accuracy of the displacement sensor.

This system has been found to perform with a greater degree of accuracy and control than expected. The smallest nozzle available for use with the Intertronics syringe has an outer diameter of less than 200μm, therefore the minimum track width attainable is approximately 200μm. The digital dispenser takes less time to optimise than the Smart Pump, meaning that it is preferable to the Smart Pump where larger feature sizes are required.

The ink is cured following deposition.

It is to be understood that any feature described in relation to any one embodiment may be used alone, or in combination with other features described, and may also be used in combination with one or more features of any other of the embodiments, or any combination of any other of the embodiments. Further, equivalents and modifications not described above may also be employed without departing from the scope of the invention, which is defined in the accompanying claims.

**Claims**

1. A damage sensor, comprising at least one direct write resistive element applied to an area of a substrate by a direct write process.

2. A damage sensor according to claim 1, wherein the number of direct write resistive elements is one and wherein the damage sensor further comprises a first direct write conductive track and a second direct write conductive track adjoining respectively two separated portions of the perimeter of the area of the direct write resistive element.

3. A damage sensor according to claim 1, wherein the damage sensor comprises a plurality of the direct write resistive elements each extending between and connected to a first direct write track and a second direct write track.

4. A damage sensor according to claim 3, wherein the first and second direct write tracks are direct write conductive tracks.

5. A damage sensor according to claim 3 or claim 4, wherein the first and second direct write tracks and the plurality of direct write resistive elements are substantially rectangular shaped with the longer sides of the direct write tracks substantially perpendicular to the longer sides of the direct write resistive elements.

6. A damage sensor according to claim 1, wherein the damage sensor comprises:

   a plurality of the direct write resistive elements each in the form of an annular resistive element, the plural annular resistive elements positioned in an annular arrangement with respect to each other with respective gaps provided between respective annular resistive elements; and conductive tracks between the respective annular resistive elements.

7. A damage sensor according to any of claims 1 to 6, wherein the direct write resistive element/elements is/are applied partly to a top surface and an edge surface of a first substrate and partly to a top surface of a second substrate so as to extend over a bonded edge where the bottom surface of the first substrate and the top surface of the second substrate are bonded together.

8. A damage sensor according to any of claims 1 to 6, wherein the direct write resistive element/elements is/are positioned between a bottom surface of a first substrate and a top surface of a second substrate so as to extend over a bonded edge where the bottom surface of the first substrate and the top surface of the second substrate are bonded together.

9. A damage sensor according to any of claims 1 to 8, wherein the damage sensor has a resistance greater than or equal to 10Ω.

10. A method of providing a damage sensor; the method comprising:

   applying at least one direct write resistive element to an area of a substrate by a direct write process.

**11.** A method according to claim 10, wherein the method comprises applying a first direct write track, a second direct write track, and a plurality of direct write resistive elements each extending between and connected to the first direct write track and the second direct write track.

**12.** A method according to claim 11, wherein the first and second direct write tracks are direct write conductive tracks.

**13.** A method according to claim 11 or claim 12, wherein the first and second direct write tracks and the plurality of direct write resistive elements are substantially rectangular shaped with the longer sides of the direct write tracks substantially perpendicular to the longer sides of the direct write resistive elements.

**14.** A method according to claim 10, wherein the method comprises:

applying a plurality of the direct write resistive elements each in the form of an annular resistive element, the plural annular resistive elements positioned in an annular arrangement with respect to each other with respective gaps provided between respective annular resistive elements; and
applying conductive tracks between the respective annular resistive elements.

**15.** A method according to any of claims 11 to 13, wherein two of the direct write resistive elements are applied either side of a predicted damage source, or are applied so as to surround a predicted damage source.

# Fig.1.

# Fig.2.

# Fig.3.

# Fig.4.

# Fig.5.

# Fig.6.

Fig.7.

EP 2 163 876 A1

# Fig.8.

110

112

2MHz    6MHz    10MHz

114

# Fig.9.

116

112

2MHz    6MHz    10MHz

114

Europäisches
Patentamt

European
Patent Office

Office européen
des brevets

# EUROPEAN SEARCH REPORT

Application Number

EP 08 27 5020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/284232 A1 (RICE BRIAN P [US]) 29 December 2005 (2005-12-29) * abstract * * figures 1,2,4,6 * * paragraphs [0004], [0007] * * claims 1-26 * | 1-15 | INV. G01M5/00 |
| D,X | WO 2007/088395 A (BAE SYSTEMS PLC [GB]; FOOTE PETER DAVID [GB]) 9 August 2007 (2007-08-09) * abstract * * page 1, line 3 - page 3, line 2 * * page 3, line 20 - line 23 * * page 7, line 14 - line 31 * * page 13, line 8 - line 30 * * claims 1,21,22; figures 1,2 * | 1-15 | |
| X | US 6 986 287 B1 (DORFMAN BENJAMIN F [US]) 17 January 2006 (2006-01-17) * abstract * * figure 4 * * column 1, line 14 - column 4, line 8 * * claims 1-21 * | 1-15 | TECHNICAL FIELDS SEARCHED (IPC) G01M |
| E | WO 2008/086551 A (MAIER VIKTOR [AT]; MAIER KAROLA [AT]; HASSAN MOHAMED [AT]; KRAUS ALEXA) 24 July 2008 (2008-07-24) * the whole document * | 1 | |

The present search report has been drawn up for all claims

| Place of search | Date of completion of the search | Examiner |
|---|---|---|
| The Hague | 13 March 2009 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 27 5020

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2009

| Patent document cited in search report | | Publication date | Patent family member(s) | | Publication date |
|---|---|---|---|---|---|
| US 2005284232 | A1 | 29-12-2005 | CA<br>EP<br>WO | 2570117 A1<br>1766357 A1<br>2006004733 A1 | 12-01-2006<br>28-03-2007<br>12-01-2006 |
| WO 2007088395 | A | 09-08-2007 | EP<br>US | 1979731 A1<br>2009007688 A1 | 15-10-2008<br>08-01-2009 |
| US 6986287 | B1 | 17-01-2006 | NONE | | |
| WO 2008086551 | A | 24-07-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007088395 A1

### Non-patent literature cited in the description

- Proceedings of the 5th International Workshop on Structural Health Monitoring. September 2005